# EUROPEAN PATENT APPLICATION

(11) **EP 4 550 500 A1**
(43) Date of publication of application: **07.05.2025**
(21) Application number: 24209674.1
(22) Date of filing: 30.10.2024
(51) Int. Cl.: H01M 10/04, H01M 10/0587, H01M 10/42, H01M 50/46

(54) **ELECTRODE ASSEMBLY AND RECHARGEABLE BATTERY INCLUDING THE SAME**

(30) Priority: 06.11.2023 KR 20230151931
(71) Applicant: Samsung SDI Co., Ltd., Yongin-si, Gyeonggi-do 17084 (KR)
(72) Inventor: Ha, Jaehwan, 17084 Gyeonggi-do (KR); Kim, Duckhyun, 17084 Gyeonggi-do (KR); Lee, Dong Myung, 17084 Gyeonggi-do (KR); Yoo, Heeeun, 17084 Gyeonggi-do (KR)
(74) Representative: Michalski Hüttermann & Partner Patentanwälte mbB

(57) **Abstract**

An electrode assembly includes: a positive electrode including: a positive electrode current collector; and a positive electrode active material layer on at least one side of the positive electrode current collector; a negative electrode including: a negative electrode current collector; and a negative electrode active material layer on at least one side of the negative electrode current collector; and a separator between the positive electrode and the negative electrode, and formed by winding the positive electrode, the negative electrode, and the separator, wherein at an outermost portion of the electrode assembly, the positive electrode is finished longer than the negative electrode, and the separator is finished longer than the positive electrode.

## Description

### BACKGROUND

### 1. Field

Aspects of some embodiments of the present disclosure relate to an electrode assembly, a wound electrode assembly, and a rechargeable battery including the electrode assembly.

### 2. Description of the Related Art

Unlike a primary battery, a rechargeable battery is a battery configured to be repeatedly charged and discharged. Small-capacity rechargeable batteries are used in portable small electronic devices such as portable phones, laptop computers, and camcorders. Rechargeable batteries with large capacity and high density may be used as a power source for driving motors of hybrid vehicles and electric vehicles or for energy storage.

A rechargeable battery may desirably demonstrate high-capacity and high power characteristics while being safe even when the size is the same, and thus the development of rechargeable battery technology is also focused on this, but it is not satisfying the needs of users.

The above information disclosed in this Background section is only for enhancement of understanding of the background and therefore the information discussed in this Background section does not necessarily constitute prior art.

### SUMMARY

Aspects of some embodiments of the present disclosure include an electrode assembly that can improve safety and efficiency of a rechargeable battery, and a rechargeable battery including the electrode assembly.

However, the characteristics of embodiments according to the present disclosure are not limited to the above-mentioned problems, and other problems not mentioned can be clearly understood by a person of an ordinary skill in the art from the description of the invention described below.

An electrode assembly according to some embodiments of the present disclosure includes a positive electrode including a positive electrode current collector and a positive electrode active material layer on at least one side of the positive electrode current collector, a negative electrode including a negative electrode current collector and a negative electrode active material layer on at least one side of the negative electrode current collector, and a separator between the positive electrode and the negative electrode, and is formed by winding the positive electrode, the negative electrode, and the separator. At the outermost portion of the electrode assembly, the positive electrode is finished longer than the negative electrode, and the separator is finished longer than the positive electrode.

A rechargeable battery according to some embodiments includes the above-described electrode assembly and a case in which the electrode assembly is accommodated.

According to some embodiments of the present disclosure, because the positive electrode is finished longer than the negative electrode and the separator is finished longer than the positive electrode in the outermost portion of the electrode assembly, short-circuiting of the positive and negative electrodes can be prevented or reduced by minimizing or improving shrinkage of the separator as well as the positive electrode in a high-temperature environment.

Moreover, the electrode assembly according to some embodiments can reduce the probability of damage due to external impact as the positive electrode on the outermost portion of the electrode assembly is covered by a protective member to prevent or reduce the exposure to the external environment.

In addition, in the electrode assembly according to some embodiments, when the positive electrode and the negative electrode are designed to have the same capacity compared to the electrode assembly of related technology that is finished by surrounding the rounded region of the electrode assembly, energy density can be increased by reducing the thickness of the current collector of each positive electrode and negative electrode and the separator.

### BRIEF DESCRIPTION OF THE DRAWINGS

The drawings attached to this specification illustrate aspects of some embodiments of the present disclosure, and together with the detailed description of the invention described later, serve to further understand aspects of some embodiments of the present disclosure, and thus embodiments according to the present disclosure should not be construed as limited to the matters described in such drawings.
FIG. 1 is a schematic perspective view of an electrode assembly according to some embodiments.
FIG. 2 is a cross-sectional view of FIG. 1, taken along the line II-II.
FIG. 3A is provided for description of a positive electrode tab of the electrode assembly according to some embodiments.
FIG. 3B is provided for description of a negative electrode tab of the electrode assembly according to some embodiments.
FIG. 4 is a cross-sectional view of an electrode assembly according to some embodiments.
FIG. 5A and FIG. 5B are provided for description of a positive electrode tab of the electrode assembly according to some embodiments.
FIG. 6 is a perspective view of a rechargeable battery according to some embodiments.
FIG. 7 is a perspective view of a rechargeable battery according to some embodiments.

### DETAILED DESCRIPTION

Aspects of some embodiments of the present disclosure are described in more detail below with reference to the attached drawings. Prior to this, the terms or words used in this specification and claim range should not be construed as limited to their usual or dictionary meanings, and they must be interpreted with a meaning and concept consistent with the technical idea of the present disclosure based on the principle of being able to define appropriately the concepts of terms to explain the invention in the best possible way by the inventor. Accordingly, embodiments described in this specification and the configurations shown in the drawings are only examples of some embodiments of the present disclosure and do not represent all of the technical ideas of the present disclosure, and therefore it should be understood that there may be many equivalent and alternative variations according to some embodiments of the present disclosure.

In addition, when used in this specification, "comprise, include" and/or "comprising, including" specifies the presence of the mentioned shapes, numbers, steps, operations, members, elements, and/or these groups, and it does not exclude the presence or addition of one or more other shapes, numbers, movements, members, elements and/or groups.

In addition, for better understanding of the invention, the attached drawings may not be drawn to actual scale, but the dimensions of some components may be exaggerated. In addition, the same reference number may be assigned to the same component in other embodiments.

The statement that two objects of comparison are "the same" means "substantially the same". Therefore, substantial identity may include a deviation that is considered low in the industry, for example, a deviation of less than 5 %. Further, uniformity of a parameter in a given region may mean uniformity from an average perspective.

Although first, second, and the like are used to describe various configurations elements, these components are of course not limited by these terms. These terms are only used to distinguish one component from another component, and unless specifically stated to the contrary, the first component may also be the second component.

Throughout the specification, unless otherwise stated, each component may be singular or plural.

The placement of any component on the "top (or bottom)" of a component or the "top (or bottom)" of a component not only means that any component is placed in contact with the top (or bottom) of the component but also means that other configurations may be interposed between the component and any component on the top (or bottom) the component.

In addition, when a component is described as "on," "connected to," or "coupled to" another component, the components may be directly connected or connected to each other, but it should be understood that other components may be "interposed" between each component, or that each component may be "connected," "coupled," or "accessed" through other components.

As used in this specification, the term "and/or" includes any and all combinations of one or more of the associated listed items. Additionally, the use of "may" when describing embodiments of the present disclosure refers to "one or more embodiments of the present disclosure."

Expressions such as "one or more" and "one or more" preceding a list of elements modify the entire list of elements and do not modify individual elements in the list.

In the entire specification, "A and/or B" means A, B or A and B, unless specifically stated to the contrary, and "C to D" means higher than C and lower than D unless specifically stated to the contrary.

When a syntax like "at least one selected from A, B or C", "at least one selected from A, B and C group", and "at least one selected from A, B and C" is used to specify a list of elements A, B, and C, the syntax may refer to any and all suitable combinations.

The term "use" may be considered synonymous with the term "utilize."

As used in this specification, "substantially," "approximately," and similar terms are used as terms of approximation rather than terms of degree, and provided for consideration of inherent variations in measured or calculated values to be recognized by a person of ordinary skill in the art.

Although the terms first, second, third, and the like may be used in this specification to describe various elements, components, regions, layers and/or sections, but these elements, components, regions, layers and/or sections are should not be limited by these terms. This term is used to distinguish one element, component, region, drawing layer or cross-section from another element, component, region, drawing layer or cross-section. Accordingly, a first element, component, region, layer or section described below may be named a second element, component, region, layer or section without departing from the teachings of the example embodiments.

As shown in the drawing, to describe the relationship between one element or feature and another element(s) or feature(s), spatial relative terms such as "beneath," "below," "lower," "above", "upper", and the like may be used for convenience in description in this specification. The spatially relative position will be understood to encompass different directions of the device in use or operation in addition to the direction depicted in the drawings. For example, when the device in the drawing is flipped, an element described as "below" or "bottom" is understood to be "on" or "above" another element. Therefore, the term "below" may encompass both up and down directions.

The terms used in this specification are intended to describe embodiments of the present disclosure and are not intended to limit the present disclosure.

In example embodiments of a prismatic, pouch-type rechargeable battery according to some embodiments of the present disclosure, one of the prismatic and pouch-type rechargeable batteries is selected and the selected battery is described as having a general structure, and in the case of a generally applied technology, a general structure of prismatic and pouch-type rechargeable batteries will be disclosed.

An electrode assembly according to some embodiments of the present disclosure is provided. An electrode assembly according to some embodiments includes a positive electrode that includes a positive electrode current collector and a positive electrode active material layer on at least one side of the positive electrode current collector, a negative electrode that includes a negative electrode current collector and negative electrode active material layer on at least one side of the negative electrode current collector, and a separator between the positive electrode and the negative electrode, and is formed by winding the positive electrode, the negative electrode, and the separator. Here, at the outermost portion of the electrode assembly, the positive electrode is finished longer than the negative electrode, and the separator is finished longer than the positive electrode.

According to some embodiments, the electrode assembly includes a rounded region and a flat region, the separator may end by covering the rounded region of the electrode assembly, and the positive electrode and the negative electrode may end in the flat region of the electrode assembly.

According to some embodiments, when the positive electrode is finished longer than the negative electrode, the positive electrode current collector of the positive electrode may is finished longer than the negative electrode.

According to some embodiments, the positive electrode active material layer is on one side of the positive electrode current collector and an adhesive tape for attaching the separator may be provided on the other side of the positive electrode current collector facing the positive electrode active material layer.

According to some embodiments, the separator may be finished at a terminal end of the adhesive tape.

According to some embodiments, a ceramic functional layer covering the positive electrode active material layer may be on the other side of the positive electrode current collector, which corresponds from a start end of the adhesive tape to the terminal end of the positive electrode current collector.

According to some embodiments, a seal tape may be attached to the ceramic functional layer while surrounding the separator in the outermost portion of the electrode assembly.

According to some embodiments, the positive electrode may be finished longer than the negative electrode by a range of 1 millimeter (mm) to 5 mm, for example, 3 mm.

According to some embodiments, the electrode assembly further includes a positive electrode tab connected to the positive electrode current collector and a negative electrode tab connected to the negative electrode current collector. Here, the positive electrode tab is connected to an uncoated region provided at an end of the positive electrode current collector, and the negative electrode tab may be connected to an uncoated region provided at an end of the negative electrode current collector. On the other hand, the positive electrode tab may be connected to an uncoated region provided in an area other than the end of the positive electrode current collector, and the negative electrode tab may be connected to the uncoated region provided at the end of the negative electrode current collector.

According to some embodiments, the terminal end of the separator may not overlap with the positive electrode tab.

A rechargeable battery according to some embodiments of the present disclosure includes the aforementioned electrode assembly, and a case in which the electrode assembly is accommodated. The rechargeable battery may be configured as a prismatic or pouch-type.

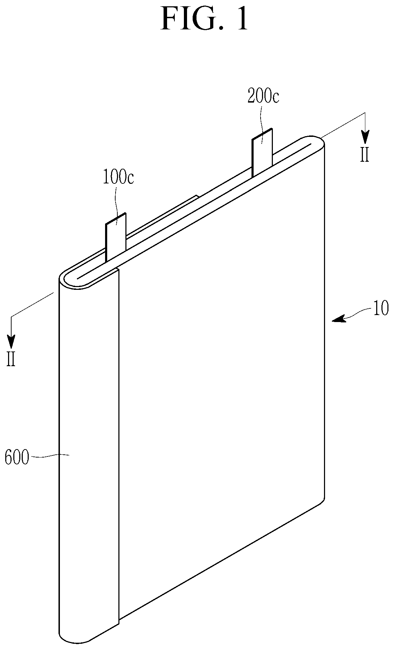

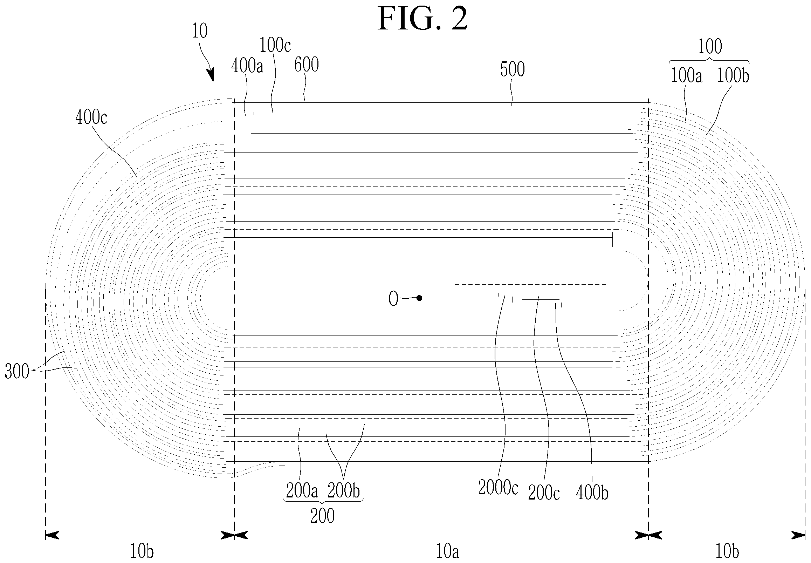

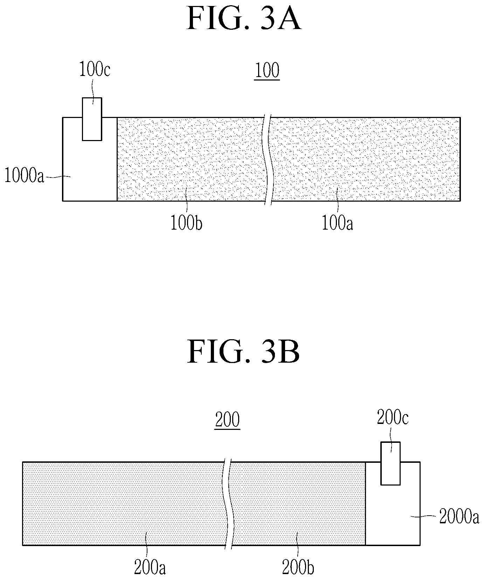

FIG. 1 is a schematic perspective view of an electrode assembly according to some embodiments of the present disclosure, and FIG. 2 is a cross-sectional view of FIG. 1, taken along the line II-II. FIG. 3A shows a positive electrode tab of the electrode assembly according to some embodiments. FIG. 3B shows a negative electrode tab of the electrode assembly according to some embodiments.

An electrode assembly in the present disclosure is an electrode assembly for a rechargeable battery, and, for example, it may be an electrode assembly for a lithium rechargeable battery, but the electrode assembly according to embodiments of the present disclosure are not necessarily limited thereto.

As shown in FIG. 1 and FIG. 2, an electrode assembly 10 is formed a jelly-roll shaped electrode assembly formed by winding a positive electrode 100, a negative electrode 200, and a separator 300 located between the positive electrode 100 and the negative electrode 200 such that start ends of the positive electrode 100, the negative electrode 200 and the separator 300 are located at a central portion of the electrode assembly 10 and terminal ends of the positive electrode 100, the negative electrode 200 and the separator 300 are located at the outermost portion of the electrode assembly 10.

That is, the electrode assembly 10 is formed by winding the positive electrode 100, the negative electrode 200, and the separator 300, which are formed in the shape of a thin strip, several times around a wound axis O. The finally wound electrode assembly 10 may be configured to include a flat region 10a that is substantially flat and a rounded region 10b curved in a round shape. The rounded region 10b is arranged opposite to each other, arranging the flat region 10a therebetween. The curvature radius of the rounded region 10b for the outermost portion of the electrode assembly 10 may vary depending on the number of windings on the positive electrode 100, the negative electrode 200, and the separator 300. It should be explained herein that "a rounded region" refers that a profile of the region has a shape with a part of a circle, rather than having a shape of the entire circle.

The positive electrode 100 includes a positive electrode current collector 100a formed of a metal foil such as aluminum or an aluminum alloy and a positive electrode active material layer 100b including a positive electrode active material such as a transition metal oxide applied to at least one side of the positive electrode current collector 100a.

As shown in FIG. 2, with reference to the finally wound electrode assembly 10, the positive electrode active material layer 100b is located mostly at both sides of the positive electrode current collector 100a, but, on the other hand, the positive electrode active material layer 100b is located only one side (inner side in FIG. 2) that faces the central portion of the electrode assembly 10 in the positive electrode current collector 100a located on the rounded region 10b and the flat region 10a corresponding to the outermost portion of the electrode assembly 10.

Meanwhile, the positive electrode active material layer 100b is not located at the terminal end portion of the positive electrode current collector 100a located on the flat region 10a as the outermost portion of the electrode assembly 10. That is, the terminal end portion is formed as a positive electrode uncoated region 1000a in which no positive active material is applied. A positive electrode tab 100c is attached to the positive electrode uncoated region 1000a.

In FIG. 3A, the positive electrode 100 according to some embodiments has a strip shape before being wound. As shown in FIG. 3A, the positive electrode tab 100c is attached while being protruded to the positive electrode uncoated region 1000a provided in one end of the positive electrode 100 (i.e., the terminal end portion in the wound state). The positive electrode tab 100c may be connected with the positive electrode uncoated region 1000a by welding a separate part formed of the same material as the positive electrode current collector 100a. On the other hand, in some embodiments, the positive electrode tab 100c may be formed as a part of the positive electrode current collector 100a when manufacturing the positive electrode current collector 100a.

As shown in FIG. 2, an adhesive tape 400a that covers the positive electrode tab 100c and at the same time to which the separator 300 is attached may be located in the uncoated region 1000a of the positive electrode current collector 100a to which the positive electrode tab 100c is attached. Here, an end of the adhesive tape 400a may be arranged or formed to match the terminal end portion of the positive electrode current collector 100a or cover the terminal end portion of the positive electrode current collector 100a.

The negative electrode 200 includes a negative electrode current collector 200a formed of a metal foil such as copper, a copper alloy, nickel, or a nickel alloy and a negative electrode active material layer 200b including a negative electrode active material such as graphite or carbon applied to at least one side of the negative electrode current collector 200a.

As shown in FIG. 2, with reference to the finally wound electrode assembly 10, the negative electrode active material layer 200b is located mostly at both sides of the negative electrode current collector 200a, but, on the other hand, the negative electrode active material layer 200b is located on one side (outer side in FIG. 2) of the negative electrode current collector 200a, facing an outer edge of the electrode assembly 10, located on the flat region 10a and the rounded region 10b corresponding to the central portion of the electrode assembly 10.

In addition, the negative electrode active material layer 200b is not located at a start end portion of the negative electrode current collector 200a located on the flat region 10a at the center of the electrode assembly 10. That is, the start end portion is formed of a negative uncoated region 2000a in which no negative active material is applied. The negative electrode tab 200c is attached to the negative uncoated region 2000a.

In FIG. 3B, the negative electrode 200 according to some embodiments has a strip shape before being wound. As shown in FIG. 3B, the negative electrode tab 200c is attached while being protruded to the negative electrode uncoated region 2000a provided in one end of the negative electrode 200 (i.e., the start end portion in the wound state). The negative electrode tab 200c may also be connected with the negative electrode uncoated region 2000a by welding a separate part formed of the same material as the negative electrode current collector 200a, and in some embodiments, the negative electrode tab 200c may be formed as a part of the negative electrode current collector 200a when manufacturing the negative electrode current collector 200a.

As shown in FIG. 2, an adhesive tape 400b is attached to the uncoated region 2000c of the negative electrode current collector 200a while covering the negative electrode tab 200c.

The positive electrode 100, the negative electrode 200, and the separator 300 located between the positive electrode 100 and the negative electrode 200 are finished by being wound a number of times (e.g., a set or predetermined number of times), and the positive electrode 100 is finished longer than the negative electrode 200. That is, referring to FIG. 2, the terminal end portion of the positive electrode current collector 100a of the positive electrode 100 extends beyond the terminal end portion of the negative electrode 200 and thus is finished while covering the end portion of the negative electrode 200. Here, a distance between the final end of the positive electrode current collector 100a and the final end of the negative electrode 200 may be maintained between 1 mm and 5 mm, and according to some embodiments, it is maintained at 3 mm.

Moreover, the positive electrode 100 and the negative electrode 200 may both be finished in the flat region 10a of the electrode assembly 10, and according to some embodiments, they both may be finished in the rounded region or finished in one region selected from either the rounded region or the flat region.

Meanwhile, the separator 300 is finished longer than the positive electrode 100. According to some embodiments, the separator 300 extends to one rounded area (i.e., 10b, left rounded area in FIG. 2) of the electrode assembly 10 and thus is finished in the form of covering the positive electrode 100, the negative electrode 200, and the separator 300 located in the rounded region 10b. Here, the separator 300 may be fixed by an adhesive tape 400c provided in the other side of the positive electrode current collector 100a, that is, one side where the positive electrode active material layer 100b is not provided. The adhesive tape 400c may extend not only to the rounded region 10b of the electrode assembly 10 but also to the flat region 10a of the electrode assembly 10 where each terminal end portion of the positive electrode 100 and the negative electrode 200 is located.

In addition, in the positive electrode 100 according to some embodiments, a ceramic functional layer 500 that can improve heat insulation, insulation, or strength characteristics may be located in one side of positive electrode current collector 100a, in which the positive electrode active material layer 100b is not provided. The ceramic functional layer 500 is located on one side of the positive electrode current collector 100a in a form that can completely cover the positive electrode 100 in the outermost portion of the electrode assembly 10. Accordingly, the positive electrode current collector 100a cannot be exposed to the outside of the electrode assembly 10.

A seal tape 600 is provided on the outermost portion of the electrode assembly 10 to finally finish the positive electrode 100, the negative electrode 200, and the separator 300. The seal tape 600 fixes one end of the electrode assembly 10 to an external surface of the ceramic functional layer 500 located in the flat region 10a of the electrode assembly 10 while surrounding each terminal end portion of the positive electrode 100 and the negative electrode 200 along one direction (i.e., clockwise direction in FIG. 2), and fixes the other end of the electrode assembly 10 to the other external surface of the ceramic functional layer 500 located in the flat region 10a of the electrode assembly 10 while covering the terminal end portion of the separator 300 after passing through the rounded region 10b of the electrode assembly 10 along the other direction of the electrode assembly 10 (i.e., counterclockwise direction in FIG. 2).

In such an electrode assembly 10, the positive electrode 100 is finished longer than the negative electrode 200 in the outermost portion, and the separator 300 is finished longer than the positive electrode 100. In addition, in the outermost portion of the electrode assembly 10, the positive electrode 100, that is, the positive electrode current collector 100a is covered by the ceramic functional layer 500, the separator 300, the seal tape 600, and the like, thereby preventing or reducing exposure to the outside of the electrode assembly 10.

According to some embodiments, since the positive electrode is finished longer than the negative electrode and the separator is finished longer than the positive electrode in the outermost portion of the electrode assembly, when the rechargeable battery including the electrode assembly experiences a high-temperature environment (e.g., thermal runaway), short-circuiting of the positive and negative electrodes can be prevented or reduced by minimizing or reducing shrinkage of the separator as well as the positive electrode.

Moreover, the electrode assembly according to some embodiments can reduce the probability of damage due to external impact as the positive electrode located on the outermost portion of the electrode assembly is covered by a protective member (e.g., ceramic functional layer) to prevent or reduce the exposure to the external environment.

In addition, in the electrode assembly according to some embodiments, when the positive electrode and the negative electrode are designed to have the same capacity compared to the electrode assembly of related technology that is finished by surrounding the rounded region of the electrode assembly, energy density can be increased by reducing the thickness of the current collector of each positive electrode and negative electrode and the separator.

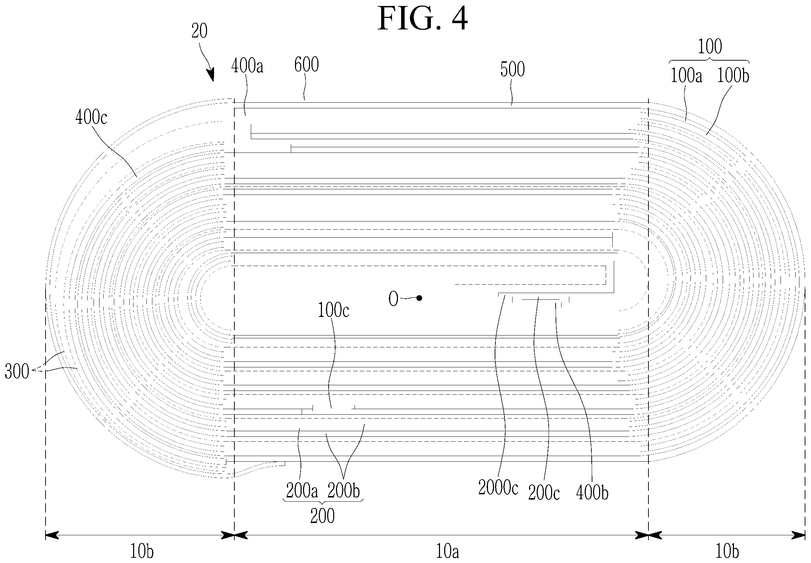

FIG. 4 is a cross-sectional view of an electrode assembly according to some embodiments. An electrode assembly 20 according to some embodiments is the same as the above-described electrode assembly 10 described above except for a position of a positive electrode tab. Accordingly, for convenience in description, the same names may be designated to the same symbols and only the positive electrode tab will be described.

As shown in FIG. 4, in the electrode assembly 20 according to some embodiments, a positive electrode tab 100c of a positive electrode 100 is attached to an uncoated region provided at a random position between portions other than an end of a positive electrode current collector 100a, that is, between opposite ends of the positive electrode current collector 100a.

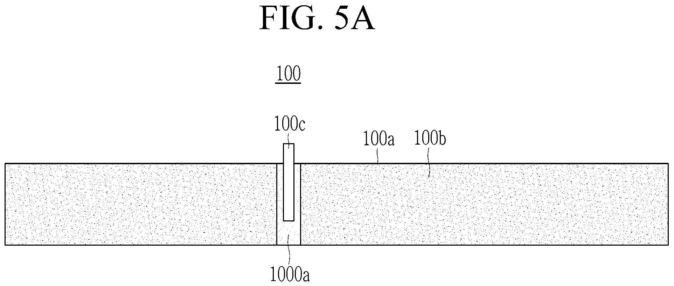

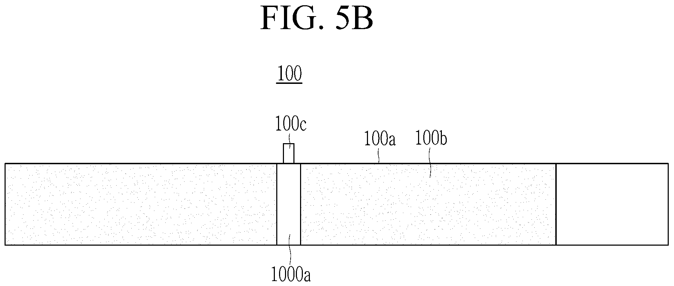

FIG. 5A and FIG. 5B are front and rear views showing the positive electrode 100 according to some embodiments in an unwound state, and as shown in these drawings, the positive electrode tab 100c is attached to an uncoated region 1000a provided in approximately a central portion of the positive electrode current collector 100a.

Accordingly, as shown in FIG. 4, the positive electrode tab 100c is located at an inner side of the electrode assembly 20 on the flat region 10a of the electrode assembly 20 in the state that the positive electrode 100 is wound.

According to some embodiments, when a seal tape 600 is finished by being attached to a ceramic functional layer 500, it may be attached to the ceramic functional layer 500 in a form that is not overlapping the positive electrode tab 100c. Referring to FIG. 4, the seal tape 600 is arranged so as not to reach the left end of the positive electrode tab 100c and is attached to the ceramic functional layer 500.

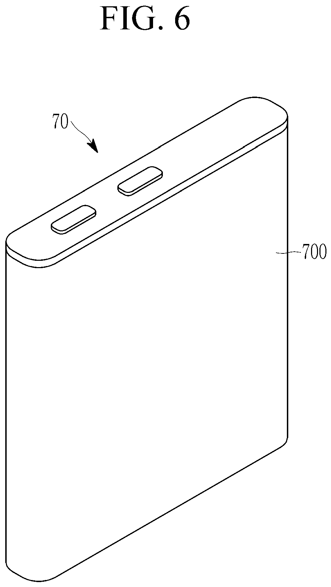

FIG. 6 is a perspective view of a rechargeable battery including an electrode assembly according to some embodiments. In a rechargeable battery 70 of FIG. 6, a case 700 accommodating the above-described electrode assembly is formed of a prismatic case with rigidity (e.g., containing a metal).

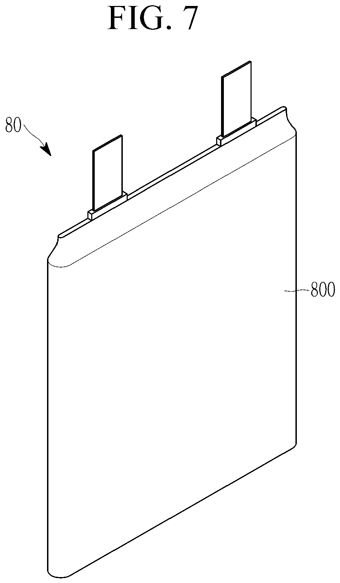

FIG. 7 is a perspective view of another rechargeable battery including an electrode assembly according to some embodiments. In a rechargeable battery 80 of FIG. 7, a case 800 including the above-described electrode assembly is formed of a pouch-type case with flexibility (e.g., containing a resin).

Table 1 below shows a result of evaluating the stability characteristic and efficiency characteristic of the electrode assembly of the above-described first and second embodiments and an electrode assembly according to a comparative example. An electrode assembly of a comparative example is the same as the electrode assembly according to some embodiments, except that a positive electrode, a negative electrode, and a separator are respectively finished in the order of the negative electrode, separator, and positive electrode in length.

**Table 1**

| | Penetration | Collision | Thermal exposure | Energy density |
|---|---|---|---|---|
| First embodiment | 20 OK / 20 ea | 16 OK / 20 ea | < 138°C OK / 20 ea | 730 Wh/L |
| Second embodiment | 20 OK / 20 ea | 18 OK / 20 ea | < 138°C OK / 20 ea | 740 Wh/L |
| Comparative example | 0 OK / 20 ea | 4 OK / 20 ea | < 133°C OK / 20 ea | 715 Wh/L |

The penetration evaluation was carried out after pausing a battery cell including each electrode assembly that has been charged for a certain period of time for a time period (e.g., a set or predetermined time period), and penetrating a center of the battery cell using a metal pin with a diameter of 3mm at a random speed (e.g. 50 mm/sec). As a result of the evaluation, it was confirmed that none of the battery cells of the first and second embodiments ignited after 20 trials, and that the battery cell of the comparative example ignited after 20 trials.

The collision evaluation was carried out by positioning a round bar (e.g., ϕ15.8 ± 0.1 mm) in a center of the battery cell including the electrode assembly of each example that has been charged and aged for a certain period of time, and freely dropping a weight (e.g.: 9.1 ± 0.46 kg) on the round bar at a certain height (e.g.: 610 ± 25 mm). As a result of the evaluation, it was confirmed that the battery cells of the first and second embodiments were good until 16 and 18 trials, respectively, after 20 trials, and the battery cell of the comparative example was good only until 4 trials after 20 trials.

The thermal expose evaluation was carried out by maintaining the electrode assembly including each fully-charged battery cell at a certain temperature for 1 hour to evaluate the condition of the battery cell. As a result of the evaluation, it was confirmed that twenty battery cells of the first and second embodiments each did not ignite below 138 °C, and each of the twenty battery cells of the comparative example did not ignite below 133 °C.

It was confirmed that the battery cells including the electrode assembles of the first and second embodiments maintained high-capacity compared to the comparative example through the energy density evaluation.

While aspects of some embodiments of the present disclosure have been described in connection with what is presently considered to be practical embodiments, it is to be understood that the present disclosure is not limited to the disclosed embodiments, but, on the contrary, is intended to cover various modifications and equivalent arrangements included within the spirit and scope of the appended claims, with functional equivalents thereof to be included therein.

### Description of Some of the Reference Characters

10,20: electrode assembly
100: positive electrode
100a: positive electrode current collector
100b: positive electrode active material layer
100c: positive electrode tab
200: negative electrode
200a: negative electrode current collector
200b: negative electrode active material layer
200c: negative electrode tab
300: separator

## Claims

1. An electrode assembly (10) comprising:
a positive electrode (100) comprising:
a positive electrode current collector (100a); and
a positive electrode active material layer (100b) on at least one side of the positive electrode current collector (100a);
a negative electrode (200) comprising:
a negative electrode current collector (200a); and
a negative electrode active material layer (200b) on at least one side of the negative electrode current collector (200a); and
a separator (300) between the positive electrode (100) and the negative electrode (200), and formed by winding the positive electrode (100), the negative electrode (200), and the separator (300),
wherein at an outermost portion of the electrode assembly (10), the positive electrode (100) is finished longer than the negative electrode (200), and the separator (300) is finished longer than the positive electrode (100).

2. The electrode assembly (10) as claimed in claim 1, wherein:
the electrode assembly (10) comprises a rounded region (10b) and a flat region (10a), and
the separator (300) is finished by covering the rounded region (10b) of the electrode assembly, and/or
wherein the electrode assembly (10) comprises a rounded region (10b) and a flat region (10a), and
the positive electrode (100) and the negative electrode (200) are finished in the flat region (10a) of the electrode assembly (10).

3. The electrode assembly (10) as claimed in claim 1 or 2, wherein:
the positive electrode current collector (100a) is finished longer than the negative electrode (200).

4. The electrode assembly (10) as claimed in any of claims 1 to 3, wherein:
the positive electrode active material layer (100b) is at a first side of the positive electrode current collector (100a), and an adhesive tape (400c) for attaching the separator (300) is at a second side of the positive electrode current collector (100a), opposing the positive electrode active material layer (100b).

5. The electrode assembly (10) as claimed in any of claims 1 to 4, wherein:
the separator (300) is finished to a terminal end portion of the adhesive tape (400c).

6. The electrode assembly (10) as claimed in any of claims 1 to 5, wherein:
a ceramic functional layer (500) covering the positive electrode active material layer (100b) is at the second side of the positive electrode current collector (100a), corresponding to a start end portion of the adhesive tape (400c) to a terminal end portion of the positive electrode current collector (100a).

7. The electrode assembly (10) as claimed in any of claims 1 to 6, further comprising a seal tape (600) attached to the ceramic functional layer (500) while surrounding the separator (300).

8. The electrode assembly (10) as claimed in any of claims 1 to 7, wherein:
the positive electrode (100) is finished longer than the negative electrode (200) by a range of 1 to 5 millimeters (mm).

9. The electrode assembly (10) as claimed in any of claims 1 to 8, wherein:
the positive electrode (100) is finished longer than the negative electrode (200) by 3 mm.

10. The electrode assembly (10) as claimed in any of claims 1 to 9, wherein:
the electrode assembly (10) further comprises
a positive electrode tab (100c) connected to the positive electrode current collector (100a) and
a negative electrode tab (200c) connected to the negative electrode current collector (200a),
the positive electrode tab (100c) is connected to an uncoated region provided at an end portion of the positive electrode current collector (100a), and the negative electrode tab (200c) is connected to an uncoated region provided at an end portion of the negative electrode current collector (200a).

11. The electrode assembly (10) as claimed in any of claims 1 to 10, wherein the electrode assembly (10) comprises:
a positive electrode tab (100c) connected to the positive electrode current collector (100a); and
a negative electrode tab (200c) connected to the negative electrode current collector (200a),
the positive electrode tab (100c) is connected to an uncoated region (1000a) provided in an area of a non-end portion of the positive electrode current collector (100a), and the negative electrode tab (200c) is connected to an uncoated region (2000a) provided at an end portion of the negative electrode current collector (200a).

12. The electrode assembly (10) as claimed in any of claims 1 to 11, wherein:
a terminal end portion of the separator (300) is not overlapped with the positive electrode tab (100c).

13. A rechargeable battery (80) comprising:
the electrode assembly (10) as claimed in any of claims 1 to 12; and
a case (700) in which the electrode assembly (10) is accommodated.

14. The rechargeable battery (80) as claimed in claim 13, wherein the rechargeable battery (80) has a prismatic shape.

15. The rechargeable battery (80) as claimed in claim 13 or 14, wherein the rechargeable battery (80) is a pouch-type rechargeable battery.
